# EUROPÄISCHE PATENTANMELDUNG

(11) **EP 3 267 048 A1**
(43) Veröffentlichungstag der Anmeldung: **10.01.2018**
(21) Anmeldenummer: 17179529.7
(22) Anmeldetag: 20.04.2015
(51) Int. Cl.: F16B 11/00

(54) **VORRICHTUNG ZUM AUSHÄRTEN EINES ELEKTRISCH LEITENDEN KLEBSTOFFES**

(30) Priorität: 29.04.2014 DE 102014208094
(62) Teilanmeldung aus: 15164224.6
(71) Anmelder: MAGNA STEYR Engineering AG & Co KG, 8041 Graz (AT)
(72) Erfinder: Hrach, Daniel, 8074 Raaba (AT); Mayr, Franz, 8323 St.Marein bei Graz (AT)
(74) Vertreter: Zangger, Bernd

(57) **Zusammenfassung**

Eine Vorrichtung zum Aushärten eines elektrisch leitenden Klebstoffes (1), wobei der Klebstoff (1) zwischen einem ersten Bauteil (2) und einem zweiten Bauteil (3) angeordnet ist, wobei die Vorrichtung zumindest einen Stempel (4) umfasst, wobei der Stempel (4) dazu eingerichtet ist, eine Druckkraft (F) auf das erste Bauteil (2) in Richtung zum zweiten Bauteil (3) auszuüben und über den Stempel (4) als erster Pol und einen am zweiten Bauteil (3) anliegenden zweiten Pol ein Strom in die Bauteile (2, 3) und über die Bauteile (2, 3) in den Klebstoff (1) geführt werden kann und ein Verfahren zur Herstellung einer Klebeverbindung.

## Beschreibung

### Gebiet der Erfindung

Die vorliegende Erfindung betrifft eine Vorrichtung zum Aushärten eines elektrisch leitenden Klebstoffes, wobei der Klebstoff zwischen einem ersten Bauteil und einem zweiten Bauteil angeordnet ist und ein Verfahren zur Herstellung einer Klebeverbindung.

### Stand der Technik

Es ist bekannt Klebstoff zwischen zwei Bauteilen zu verwenden um diese miteinander zu verbinden, insbesondere ist der Einsatz von thermisch aushärtenden Klebstoffen zum Verbinden von flachen Karosseriebauteilen, speziell von Blechen, in der Automobilindustrie bekannt. Zur raschen Fixierung der Karosseriebauteile werden diese bei einem Klebeprozess üblicherweise durch zusätzliche Hilfsmittel wie Schrauben, Nieten oder Schweißen aneinander fixiert, bis es in einem nachfolgenden Schritt zur Aushärtung des Klebstoffes in einem Ofen kommt.

Übliche Klebstoffe verlangen dabei eine lange Vorwärmzeit und Aushärtzeit und erfordern daher zeitintensive Prozesse.

Weiters ist, aus der DE 10 2013 003 912 A1, die Verwendung von elektrisch leitfähigen Klebstoffen bekannt. Diese ermöglichen durch Hindurchleiten von elektrischem Strom durch den Klebstoff ein Aushärten des Klebstoffes. Dazu ist es jedoch erforderlich das der Klebstoff, insbesondere eine aufgebrachte Kleberaupe, zur Einleitung des Stromes von außen zugänglich ist. Auch müssen dazu umständlicherweise Elektroden in die Klebstoffraupe geführt werden.

### Zusammenfassung der Erfindung

Es ist eine Aufgabe der Erfindung, eine Vorrichtung zum Aushärten eines elektrisch leitenden Klebstoffes anzugeben, die ein rasches Aushärten des Klebstoffes ermöglicht und dabei einfach und prozesssicher angewendet werden kann und ein entsprechendes Verfahren zur Herstellung einer Klebeverbindung.

Die Lösung der Aufgabe erfolgt durch eine Vorrichtung zum Aushärten eines elektrisch leitenden Klebstoffes, wobei der Klebstoff zwischen einem ersten Bauteil und einem zweiten Bauteil angeordnet ist, wobei die Vorrichtung zumindest einen Stempel umfasst, wobei der Stempel dazu eingerichtet ist, eine Druckkraft auf das erste Bauteil in Richtung zum zweiten Bauteil auszuüben und über den Stempel als erster Pol und einen am zweiten Bauteil anliegenden zweiten Pol ein Strom in die Bauteile und über die Bauteile in den Klebstoff geführt werden kann, wobei der Stempel eine Temperaturmesseinheit umfasst.

Erfindungsgemäß werden elektrisch leitfähige Bauteile genutzt, beispielsweise Bleche für den Karosseriebau, um Strom zu einem zwischen den Bauteilen eingebrachten Klebstoff zu leiten. Dazu wird ein Stempel auf das erste Bauteil gedrückt, so dass dieses gegen den Klebstoff und das zweite Bauteil gepresst wird und somit die Bauteile fixiert, einen Anpressdruck für die Klebung liefert und zudem als Spannungspol zur Einleitung eines Stroms von einer Spannungsquelle in die Bauteile und somit den elektrisch leitfähigen Klebstoff genutzt wird. Der zweite Pol der Spannungsquelle, insbesondere ein Massepunkt, liegt dazu am zweiten Bauteil an. Durch den so eingeführten Strom wird der Klebstoff über die elektrische Verlustleistung erhitzt und erfolgt eine rasche Aushärtung des Klebstoffs, insbesondere ohne Verwendung von zusätzlichen temporären Befestigungsmitteln und ohne den Klebstoff direkt von außen kontaktieren zu müssen.

Hierfür verwendete Klebstoffe können zum Beispiel Harze sein, und können beispielsweise ihre elektrische Leitfähigkeit durch Einbringen von Metall- oder Kohlenstoff-Pulvern oder anderen elektrisch leitfähigen Zusatzstoffen wie Amiden oder Sulfiden erhalten haben.

Der eingebrachte Strom kann ein Wechselstrom, Gleichstrom oder auch gepulster Gleichstrom sein.

Erfindungsgemäß umfasst der Stempel eine Temperaturmesseinheit. Die Vorrichtung umfasst bevorzugt eine Einheit zur Auswertung der Temperaturmesswerte und zur Steuerung oder Regelung der Temperatur oder des Temperaturverlaufs an der Temperaturmesseinheit und somit am Klebstoff, um ein optimales Aushärten zu erreichen.

Bevorzugt ist der zweite Pol durch einen weiteren Stempel ausgebildet, wobei der weitere Stempel dazu ausgebildet ist, eine Druckkraft auf das zweite Bauteil in Richtung zum ersten Bauteil auszuüben. Die beiden Stempel drücken daher gegeneinander.

Besonders bevorzugt sind der Stempel und der weitere Stempel Teile einer Zange. Die erfindungsgemäße Vorrichtung umfasst daher eine Zange mit den beiden Stempeln, so dass das Andrücken der Stempel auf die Bauteile besonders einfach ist.

Auch der weitere Stempel kann eine eigene Temperaturmesseinheit umfassen.

Bevorzugt liegen am ersten Bauteil und/oder am zweiten Bauteil mehrere Klebestellen an. Ein Bauteil wird dann als Pol für mehrere Klebstellen genutzt.

Besonders bevorzugt ist das zweite Bauteil als gemeinsamer Massepunkt eingerichtet für zumindest zwei Stempel. Die zumindest zwei Stempel liegen dann am ersten Bauteil an und können ein oder mehrere erste Bauteile niederdrücken.

Besonders bevorzugt liegen die zumindest zwei Stempel an zumindest zwei verschiedenen ersten Bauteilen an, und sind dazu eingerichtet, jeweils eine Druckkraft auf die verschiedenen ersten Bauteile in Richtung zum zweiten Bauteil auszuüben, um über die Stempel als erster Pol und den am zweiten Bauteil anliegenden zweiten Pol Strom in die Bauteile und über die Bauteile jeweils in den Klebstoff zu führen.

Der Strom kann über die zumindest zwei Stempel zeitlich abwechselnd, insbesondere getaktet, geführt werden. Dies ist vor allem dann notwendig, wenn nur eine gemeinsame Zuleitung der Energie für mehrere elektrisch parallel geschaltete Stempel als erster Pol erfolgt. Da in den einzelnen Klebestellen unterschiedliche elektrische Übergangswiderstände herrschen können, würden Klebestellen mit einem niedrigeren Übergangswiderstand die Stromquelle unnötig belasten bzw. Klebestellen, die einen hohen Übergangswiderstand aufweisen, nicht oder erst später ausgehärtet sein, wenn der Strom über eine gemeinsame Zuleitung gleichzeitig an beide Stempel geführt würde.

Bevorzugt wird das Taktverhältnis, also der Takt der Umschaltung der Stromquelle zu den verschiedenen Klebestellen bzw. Stempeln, in Abhängigkeit der Temperatur oder des Temperaturverlaufes der in den Stempeln und/oder den Bauteilen gemessenen Temperaturen bestimmt.

In einer anderen Ausführungsform wird der Strom zu den zumindest zwei Stempeln unabhängig voneinander geführt. Für jeden Stempel erfolgt die Energiezuführung somit separat und jeder Stromkreis eines jeden Stempels kann separat geregelt werden, um einen gewünschten Temperatur- und Aushärteverlauf an jeder Klebestelle zu erreichen.

Ein Takten der Energie, also Umschalten der Energie von einem Stempel zum anderen, ist hier nicht erforderlich.

Ein erfindungsgemäßes Verfahren zur Herstellung einer Klebeverbindung zwischen einem ersten Bauteil und einem zweiten Bauteil mittels eines elektrisch leitenden Klebstoffes umfasst die Schritte, dass mittels eines Stempels eine Druckkraft auf das erste Bauteil in Richtung zum zweiten Bauteil ausgeübt wird, um die Bauteile gegeneinander zu drücken, und über den Stempel als erster Pol und einen am zweiten Bauteil anliegenden zweiten Pol ein Strom in die Bauteile und über die Bauteile in den Klebstoff geführt wird, sodass der Klebstoff erhitzt wird und aushärtet.

Erfindungsgemäß umfasst dabei der Stempel eine Temperaturmesseinheit und der Strom, der in den Klebstoff geführt wird, wird so geregelt, dass an der Temperaturmesseinheit eine bestimmte Temperatur oder ein bestimmter Temperaturverlauf anliegt. Die Regelung des Stromes kann beispielsweise als PWM-Regelung (Puls-Weiten-Modulation) erfolgen. Wenn mehrere Stempel verwendet werden kann der Strom wie oben beschrieben über einen gemeinsamen Stromkreislauf, beispielsweise getaktet, zugeführt werden oder auch über mehrere separate Stromkreise.

### Kurzbeschreibung der Zeichnungen

Die Erfindung wird im Folgenden beispielhaft unter Bezugnahme auf die Zeichnungen beschrieben.
- Fig. 1: ist eine schematische Seitenansicht einer erfindungsgemäßen Vorrichtung.
- Fig. 2: ist eine schematische Seitenansicht einer weiteren erfindungsgemäßen Vorrichtung.
- Fig. 3: zeigt einen möglichen Temperaturverlauf in einer Klebestelle in einem erfindungsgemäßen Verfahren.

### Detaillierte Beschreibung der Erfindung

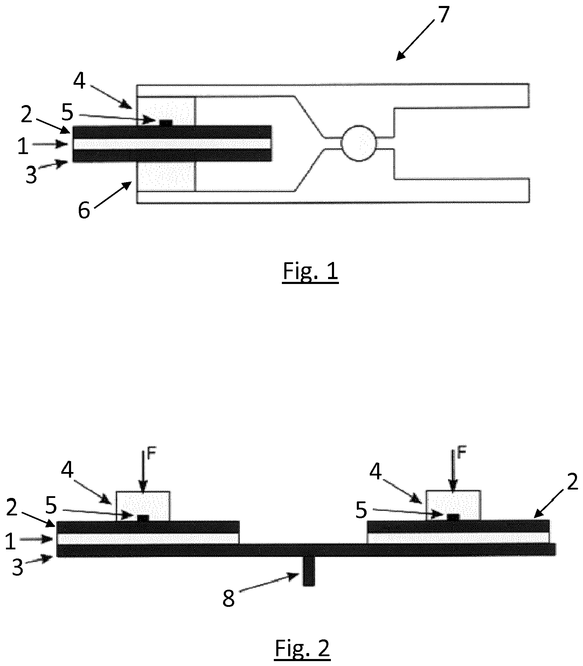

In Fig. 1 ist eine erfindungsgemäße Vorrichtung zum Aushärten eines elektrisch leitenden Klebstoffes 1 dargestellt, wobei der Klebstoff 1 zwischen einem elektrisch leitfähigen ersten Bauteil 2, insbesondere einem Blech, und einem elektrisch leitfähigen zweiten Bauteil 3, insbesondere einem zweiten Blech, aufgebracht ist, dargestellt. Die Vorrichtung der Fig. 1 bildet eine Zange 7, wobei an den Greifbacken der Zange 7 jeweils Stempel 4, 6 angeordnet sind. Wenn die Zange 7 geschlossen wird, drücken die Stempel 4, 6 von beiden Seiten auf die Anordnung aus erstem Bauteil 2, Klebstoff 1 und zweitem Bauteil 3 und pressen so die Bauteile 2, 3 gegen den Klebstoff 1, so dass die Bauteile 2, 3 fixiert werden und ein verrutschen der Bauteile 2, 3 verhindert wird. Dabei sind die Stempel 4, 6 zusätzlich elektrisch mit einer nicht dargestellten Spannungsquelle verbunden, so dass durch die Stempel 4, 6 ein Strom in die Bauteile 2, 3 und den Klebstoff 1 eingebracht werden kann, der dabei aushärtet.

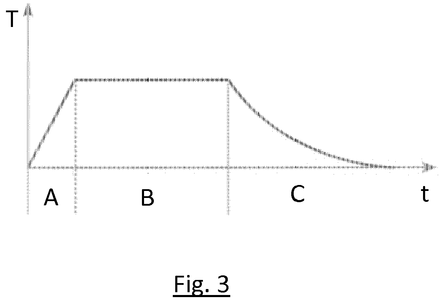

Beim Einbringen des Stromes wird, zum Erfassen der dabei entstehenden Wärme am ersten Bauteil 2, die Temperatur mittels einer Temperaturmesseinheit 5 gemessen, die am Stempel 4 angebracht ist. Die Erfassung der Temperatur und Regelung der Stromzuführung kann durch eine entsprechende Regelungseinheit automatisiert erfolgen. Ein möglicher Temperaturverlauf der durch die Regelungseinheit umgesetzt wird, ist in Fig. 3 dargestellt.

Fig. 2 stellt eine alternative Ausführungsform einer erfindungsgemäßen Vorrichtung dar, wobei ein gemeinsames zweites Bauteil 3 als gemeinsamer Massepunkt für zumindest zwei Stempel 4 verwendet wird. Das zweite Bauteil 3 ist dazu über einen elektrischen Anschluss 8 an die Spannungsquelle angeschlossen. Der zweite Pol wird hier durch die zumindest zwei Stempel 4 gebildet, die wiederum die beiden ersten Bauteile 2 mit einer Druckkraft F gegen den Klebstoff 1 an zumindest zwei Klebestellen und gegen das gemeinsame zweite Bauteil 3 pressen. Beide Stempel 4 können mit einer Temperaturmesseinheit 5 ausgestattet sein. In jeder Klebestelle kann die elektrische Leistung so geregelt sein, dass die Oberflächentemperatur in jeder einzelnen Klebstelle einem gewünschten Temperaturverlauf entspricht.

Fig. 3 stellt einen gewünschten Temperaturverlauf an einer Klebstelle bzw. an der Oberfläche eines Bauteils 2 dar, wobei vertikal die Temperatur T und horizontal die Zeit t angegeben ist. Über den oder die Temperatursensoren 5 - siehe Fig. 1 und 2., kann jeweils die Temperatur T bestimmt werden und mit der Stellgröße elektrische Leistung auf den gewünschten Temperaturverlauf, die jeweilige Aufheizkurve, geregelt werden. Im dargestellten Beispiel wird in einem ersten Zeitabschnitt A die Klebstelle mit konstanter Steigung aufgeheizt, z.B. mit 50 Grad Celsius pro Minute. Der Zeitabschnitt B repräsentiert eine Zeitdauer in welcher eine konstante Temperatur T gehalten wird und die Aushärtung überwiegend stattfindet. Am Ende des Zeitabschnitts B wird die Zuführung der elektrischen Leistung abgestellt und die Zange geöffnet, bzw. der oder die Stempel von den Bauteilen abgehoben. Im Zeitabschnitt C kühlen daraufhin die Bauteile und der Klebstoff ab. Die Dauer des Zeitabschnitts B kann je nach gewünschtem Aushärtegrad variiert werden. Für einfache Fixierungen kann diese Zeitdauer beispielsweise nur eine oder wenige Minuten betragen.

### Bezugszeichenliste

- 1: Klebstoff
- 2: erstes Bauteil
- 3: zweites Bauteil
- 4: Stempel
- 5: Temperaturmesseinheit
- 6: weiterer Stempel
- 7: Zange
- 8: elektrischer Anschluss

- F: Druckkraft
- T: Temperaturachse
- t: Zeitachse
- A: Zeitabschnitt
- B: Zeitabschnitt
- C: Zeitabschnitt

## Patentansprüche

1. Vorrichtung zum Aushärten eines elektrisch leitenden Klebstoffes (1), wobei der Klebstoff (1) zwischen einem ersten Bauteil (2) und einem zweiten Bauteil (3) angeordnet ist,
**dadurch gekennzeichnet, dass** die Vorrichtung zumindest einen Stempel (4) umfasst, wobei der Stempel (4) dazu eingerichtet ist, eine Druckkraft (F) auf das erste Bauteil (2) in Richtung zum zweiten Bauteil (3) auszuüben und über den Stempel (4) als erster Pol und einen am zweiten Bauteil (3) anliegenden zweiten Pol ein Strom in die Bauteile (2, 3) und über die Bauteile (2, 3) in den Klebstoff (1) geführt werden kann, wobei der Stempel (4) eine Temperaturmesseinheit (5) umfasst.

2. Vorrichtung nach Anspruch 1,
**dadurch gekennzeichnet, dass** der zweite Pol durch einen weiteren Stempel (6) ausgebildet ist, wobei der weitere Stempel (6) dazu ausgebildet ist, eine Druckkraft auf das zweite Bauteil (3) in Richtung zum ersten Bauteil (2) auszuüben.

3. Vorrichtung nach Anspruch 2,
**dadurch gekennzeichnet, dass** der Stempel (4) und der weitere Stempel (6) Teile einer Zange (7) sind.

4. Vorrichtung nach Anspruch 2 oder 3,
**dadurch gekennzeichnet, dass** der weitere Stempel (6) eine Temperaturmesseinheit (5) umfasst.

5. Vorrichtung nach zumindest einem der vorhergehenden Ansprüche,
**dadurch gekennzeichnet, dass** am ersten Bauteil (2) und/oder am zweiten Bauteil (3) Klebstoff (1) an mehreren Klebestellen anliegt.

6. Vorrichtung nach zumindest einem der vorhergehenden Ansprüche,
**dadurch gekennzeichnet, dass** das zweite Bauteil (3) als gemeinsamer Massepunkt verwendet wird für zumindest zwei Stempel (4).

7. Vorrichtung nach Anspruch 6,
**dadurch gekennzeichnet, dass** die zumindest zwei Stempel (4) an zumindest zwei verschiedenen ersten Bauteilen (2) anliegen, und dazu eingerichtet sind, jeweils eine Druckkraft (F) auf die verschiedenen ersten Bauteile (2) in Richtung zum zweiten Bauteil (3) auszuüben und über die Stempel (4) als erster Pol und den am zweiten Bauteil (3) anliegenden zweiten Pol ein Strom in die Bauteile (2, 3) und über die Bauteile (2, 3) jeweils in den Klebstoff (1) geführt werden kann.

8. Vorrichtung nach Anspruch 7,
**dadurch gekennzeichnet, dass** der Strom über die zumindest zwei Stempel (4) zeitlich abwechselnd , insbesondere getaktet geführt wird.

9. Vorrichtung nach Anspruch 8,
**dadurch gekennzeichnet, dass** das Taktverhältnis in Abhängigkeit der Temperatur oder des Temperaturverlaufes der in den Stempeln (4, 6) und oder den Bauteilen (2, 3) gemessenen Temperaturen bestimmt wird.

10. Vorrichtung nach Anspruch 7,
**dadurch gekennzeichnet, dass** Strom zu den zumindest zwei Stempeln (4) unabhängig voneinander geführt wird.

11. Verfahren zur Herstellung einer Klebeverbindung zwischen einem ersten Bauteil (2) und einem zweiten Bauteil (3) mittels eines elektrisch leitenden Klebstoffes (1),
**dadurch gekennzeichnet, dass** mittels eines Stempels (4) eine Druckkraft (F) auf das erste Bauteil (2) in Richtung zum zweiten Bauteil (3) ausgeübt wird und über den Stempel (4) als erster Pol und einen am zweiten Bauteil (3) anliegenden zweiten Pol ein Strom in die Bauteile (2, 3) und über die Bauteile (2, 3) in den Klebstoff (1) geführt wird, wobei der Stempel (4) eine Temperaturmesseinheit (5) umfasst und der Strom der in den Klebstoff (1) geführt wird so geregelt wird, dass an der Temperaturmesseinheit (5) eine bestimmte Temperatur oder ein bestimmter Temperaturverlauf anliegt.
